# EUROPEAN PATENT APPLICATION

(11) **EP 2 733 831 A1**
(43) Date of publication of application: **21.05.2014**
(21) Application number: 12192914.5
(22) Date of filing: 16.11.2012
(51) Int. Cl.: H02K 19/36, H01C 1/082, H01C 3/16, H02K 9/16, H02K 19/28

(54) **A starting resistor with efficient cooling**

(71) Applicant: ABB Technology Ltd, 8050 Zürich (CH)
(72) Inventor: Liu, Yujing, 722 10 Västerås (SE); Savinovic, Djordje, 723 37 Västerås (SE); Berggren, Patrik, 724 76 Västerås (SE)
(74) Representative: Savela, Reino Aleksi

(57) **Abstract**

A starting resistor (10) for a rotating electrical machine comprises resistor coils (20) with conductors (40) wound about a central axis (30) in a plurality of radial layers. An air circulation means creates an air flow (90) in radial outward direction of the resistor coils (20) such that both axial surfaces of the resistor coils (20) are exposed to the air flow (90). By exposing all the large axial surfaces of individual resistor coils (20) to an air flow (90), the cooling effect of the starting resistor (10) can be remarkably increased.

## Description

### TECHNICAL FIELD

The present invention relates to a starting resistor with an efficient cooling for enabling frequent repeated starts of a respective rotating electrical machine.

### BACKGROUND ART

A starting resistor is a device that limits the field winding current during start-up of a rotating electrical machine in order to increase the starting torque. A starting resistor is connected in series with the field coils during start-up and eventually during other situations where the machine is running out of synchronization. A typical starting resistor has a large and heavy resistor coil wound about a rotating axis of the machine. The large physical dimensions and mass follow from the requirement of being able to absorb high amounts of energy during the start-up. For a 20 MW machine the starting resistor may absorb about 1 MW for about 10-20 seconds, and this electrical energy is converted into thermal energy within the starting resistor. Most of this energy goes to raising the temperature of the starting resistor because the time is too short for transferring away the heat.

Since during a steady state operation of the machine the starting resistor is disconnected, the high temperature of the starting resistor does not need to be an issue once the machine is running. However, in order to avoid overheating of the starting resistor, it needs to cool down before the machine can be started again. Depending on the construction of the starting resistor, the cooling down can take a considerably long time. In applications where frequent repeated starts of the machine occur it is therefore desirable that cooling of the starting resistor is efficient to shorten the waiting time between two consecutive starts.

US4319216 discloses a starting resistor with a cooling channel between two resistor coils. According to US4319216 the resistor coils are housed within a frame totally covering the resistor coils from three sides and thereby substantially obstructing an efficient cooling. There remains a desire to further improve the cooling of the starting resistor of US4319216.

### SUMMARY OF THE INVENTION

One object of the invention is to provide a starting resistor with an improved cooling.

A further object of the invention is to provide an improved method for cooling a starting resistor.

These objects are achieved by the device according to appended claim 1 and the method according to appended claim 8.

The invention is based on the realization that by exposing all the large axial surfaces of individual resistor coils to an air flow, the cooling effect can be remarkably increased.

According to a first aspect of the invention, there is provided a starting resistor for a rotating electrical machine. The starting resistor comprises at least one resistor coil comprising a conductor wound about a central axis in a plurality of radial layers, and an air circulation means for creating an air flow in radial outward direction of the resistor coil. Both axial surfaces of the resistor coil are exposed to the air flow. By exposing both axial surfaces of a resistor coil to an air flow, the cooling effect can be increased.

According to one embodiment of the invention, two opposite sides of the conductor are exposed to the air flow. By this measure the cooling effect can be further increased.

According to one embodiment of the invention, the starting resistor comprises a plurality of resistor coils arranged along the central axis, each pair of two neighbouring resistor coils being separated by an air gap, each air gap being exposed to the air flow. By exposing all the axial surfaces of individual resistor coils to the air flow, the cooling effect can be even further increased.

According to one embodiment of the invention, the air circulation means comprises a coil support extending in radial direction between two neighbouring resistor coils and being in contact with the two neighbouring resistor coils. Coil supports arranged in this fashion fulfil two functions in both circulating the air and supporting the mechanical structure of the starting resistor.

According to one embodiment of the invention, the air circulation means comprises an external unit which is able to create the air flow when the electrical machine is not rotating. By this measure efficient cooling of the starting resistor can be achieved even when the electrical machine is at standstill.

According to one embodiment of the invention, two neighbouring resistor coils have opposite current directions. By this measure magnetic fields created by the resistor coils can be cancelled and the coil inductances can be kept low.

According to one embodiment of the invention, the number of resistor coils is even. By this measure all the magnetic fields can be effectively cancelled.

According to a second aspect of the invention, there is provided a method for cooling a starting resistor. The method comprises the steps of providing at least one resistor coil comprising a conductor wound about a central axis in a plurality of radial layers, and exposing both axial surfaces of the resistor coil to an air flow in radial outward direction of the resistor coil. By exposing both axial surfaces of a resistor coil to an air flow, the cooling effect can be increased.

### BRIEF DESCRIPTION OF THE DRAWINGS

The invention will be explained in greater detail with reference to the accompanying drawings, wherein
- figure 1: shows a starting resistor according to one embodiment of the invention,
- figure 2: shows a cross-section across a radial spoke of a frame in figure 1,
- figure 3: shows a cross-section between two radial spokes of the frame in figure 1, and
- figure 4: shows two alternative embodiments of a resistor coil.

### DESCRIPTION OF PREFERRED EMBODIMENTS

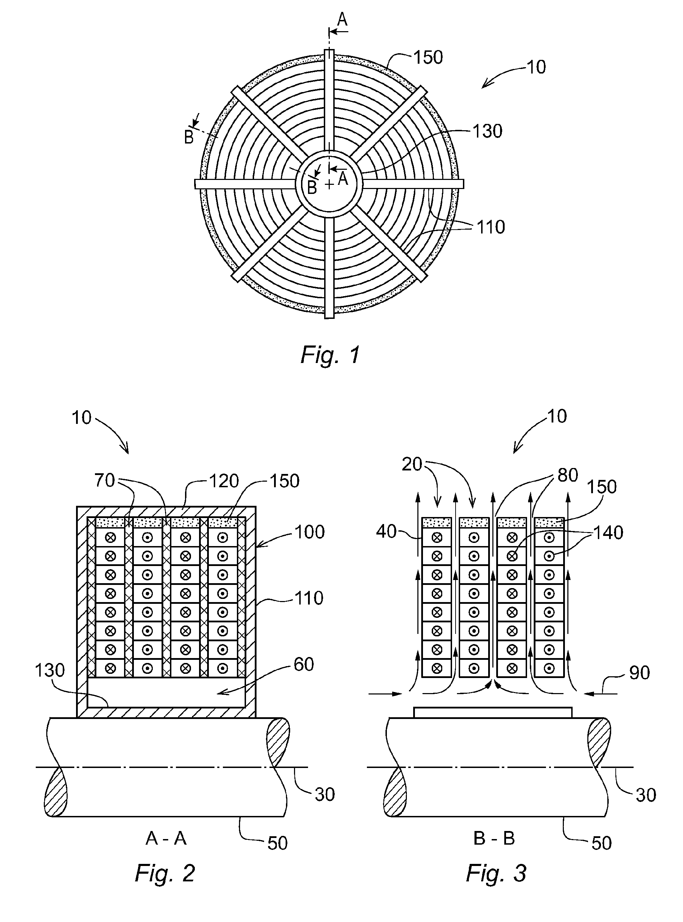

Referring to figures 1-3, in a starting resistor 10 according to one embodiment of the invention four resistor coils 20 are stacked in axial direction along a central axis 30. Each resistor coil 20 comprises a conductor 40 wound about the central axis 30 in a plurality of radial layers. Between a shaft 50 and inner circles of the resistor coils 20 there is an open space 60 where air can flow in. Each pair of two neighbouring resistor coils 20 is separated by coil supports 70 at eight radial positions, and by an air gap 80 in between the coil supports 70. The coil supports 70 are made of electrically insulating material. When the starting resistor 10 is rotating along with the electrical machine it is connected to, the coil supports 70 function as fan blades forcing air to flow in radial outward direction through the air gaps 80 and also along the axially outermost surfaces of the starting resistor 10. Both axial surfaces of each resistor coil 20 are thereby exposed to an air flow 90. Since the coil supports 70 only circulate air when the respective electrical machine is rotating, it may be advantageous to provide the starting resistor 10 with an external fan which is able to create the air flow 90 even when the electrical machine is not rotating.

The resistor coils 20 are surrounded by a frame 100 featuring eight radial spokes 110 at each axial end of the starting resistor 10. The spokes 110 are aligned with the coil supports 70 and have the same width. At outer periphery of the frame 100 the spokes 110 at one axial end are connected with those at the other axial end by axially extending bars 120. The inner radial ends of the spokes 110 are attached to a cylinder 130 surrounding the shaft 50 and rotating along with it. Thereby the frame 100 constitutes a self-sustainable structure rotating along with the shaft 50 and keeping the resistor coils 20 in place. Retaining rings 150 help the resistor coils 20 to withstand centrifugal forces.

The conductors 40 have a thin insulation layer such that consecutive turns of the conductors 40 are electrically insulated. The consecutive turns of the conductors 40 can also be clued together. In order to further improve the cooling ability of the conductors, the conductors 40 can also comprise conducting wire without an insulation layer. In such case insulation material should be inserted between consecutive turns of the conductors 40.

The resistor coils 20 can be connected in series, in parallel or using a combination of series and parallel connections, and any appropriate number of resistor coils 20 can be used depending on the requirements of the starting resistance and heat capacity. In order to cancel magnetic fields created by the resistor coils 20 and to keep the coil inductances as low as possible, the resistor coils 20 should be arranged such that current directions 140 in neighbouring resistor coils 20 are opposite. Furthermore, the number of resistor coils 20 should be even so that all the magnetic fields can be effectively cancelled.

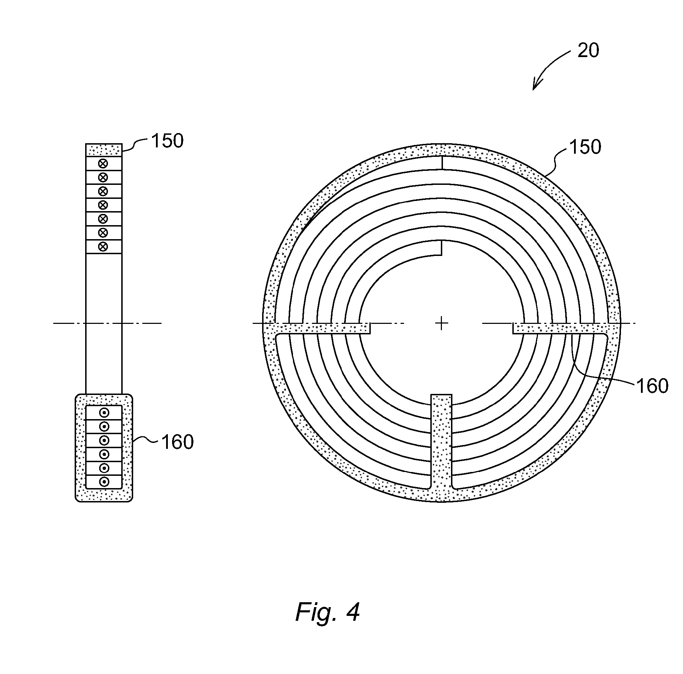

Referring to figure 4, each resistor coil 20 comprises at its outer periphery a retaining ring 150 surrounding and supporting the respective conductor 40. The retainer ring 150 can be made of glass fibre. Figure 4 shows two alternative embodiments of the resistor coil 20, the upper half of the figure showing a first embodiment according to which the resistor coil 20 is only supported in radial direction by the retaining ring 150. The lower half of the figure shows a second embodiment according to which the resistor coil 20 is also supported in axial direction by bandages 160 extending in radial direction over the resistor coil 20. The bandages 160 constitute coil supports 70 such that no additional coil supports 70 are needed when a plurality of resistor coils 20 is stacked on a common central axis 30. The resistor coils 20 may comprise protective and/or electrically insulating layers on their axial surfaces. Preferably, however, there are no such layers but instead two opposite sides of the conductors 40 are directly exposed to the air flow 90.

The invention is not limited to the embodiments shown above, but the person skilled in the art may modify them in a plurality of ways within the scope of the invention as defined by the claims.

## Claims

1. A starting resistor (10) for a rotating electrical machine, the starting resistor (10) comprising:
at least one resistor coil (20) comprising a conductor (40) wound about a central axis (30) in a plurality of radial layers, and
an air circulation means for creating an air flow (90) in radial outward direction of the resistor coil (20), **characterized in that** both axial surfaces of the resistor coil (20) are exposed to the air flow (90).

2. A starting resistor (10) according to claim 1, wherein two opposite sides of the conductor (40) are exposed to the air flow (90).

3. A starting resistor (10) according to any of the preceding claims, wherein the starting resistor (10) comprises a plurality of resistor coils (20) arranged along the central axis (30), each pair of two neighbouring resistor coils (20) being separated by an air gap (80), each air gap (80) being exposed to the air flow (90).

4. A starting resistor (10) according to claim 3, wherein the air circulation means comprises a coil support (70) extending in radial direction between two neighbouring resistor coils (20) and being in contact with the two neighbouring resistor coils (20).

5. A starting resistor (10) according to any of the preceding claims, wherein the air circulation means comprises an external unit which is able to create the air flow (90) when the electrical machine is not rotating.

6. A starting resistor (10) according to any of the preceding claims, wherein two neighbouring resistor coils (20) have opposite current directions (140).

7. A starting resistor (10) according to any of the preceding claims, wherein the number of resistor coils (20) is even.

8. A method for cooling a starting resistor (10), the method comprising the steps of:
- providing at least one resistor coil (20) comprising a conductor (40) wound about a central axis (30) in a plurality of radial layers, and
- exposing both axial surfaces of the resistor coil (20) to an air flow (90) in radial outward direction of the resistor coil (20).
